# EUROPEAN PATENT APPLICATION

(11) **EP 2 784 681 A1**
(43) Date of publication of application: **01.10.2014**
(21) Application number: 13250038.0
(22) Date of filing: 27.03.2013
(51) Int. Cl.: G06F 11/30

(54) **Visual diagnosis tool**

(71) Applicant: British Telecommunications public limited company, London EC1A 7AJ (GB)
(72) Inventor: The designation of the inventor has not yet been filed
(74) Representative: Cardus, Alan Peter

(57) **Abstract**

Operating a data processing device to determine status of equipment (e.g. CPE) by: capturing at least one image comprising a view of at least a part of the equipment; comparing in a first comparison operation, a first captured image with graphical information comprising aspects of equipment appearance to identify the equipment; comparing, either in the same, first comparison operation or in a second comparison operation, either the first or a second captured image with graphical information comprising aspects of equipment appearance to determine a status of the equipment; and displaying to a user, user support content based on the status of the equipment so determined. The data processing device may be a mobile phone, or similar, which captures the image and displays support content to a user or a server which obtains the image from and provides support content to a mobile device.

## Description

### Field of the Invention

The invention relates to the field of equipment status diagnosis in general and, in particular, to computer-based diagnosis based on visual aspects of equipment.

### Introduction

Communications service providers, such as providers of telephony and broadband services, regularly incur considerable expense in supporting their customers who have (or believe they have) faulty customer premises equipment (CPE). This requires service providers to staff helpdesks with skilled technical advisers ready to help customers overcome problems with their equipment or service. This, in turn, results in significant expenditure on the part of the service providers who have to recoup the cost through higher charges. It also can lead to frustration and inconvenience for the customer who may face delays in obtaining the appropriate assistance. In many cases, the suspect equipment will not be faulty but will either be fully working or require a simple action, which the customer is fully capable of performing themselves.

Augmented reality is a computing technique that provides information to enhance a selected representation of the physical, real-world environment, e.g. a captured image. In the realm of vision, augmented reality may be used to add information in the form of text or graphics to a captured live image of a real object or scene. The Aurasma application (app) from Autonomy Corporation plc, Cambridge Business Park, Cowley Road, Cambridge, CB4 0WZ, United Kingdom, is aimed at smart, camera-equipped mobile devices, such as a smartphone or tablet computer. The app analyses a visual image captured by the device and adds appropriate graphical information to the image for display on device. In this way the image viewed by the user of the mobile device may be augmented. Apps with similar functionality are available from other sources. Blippar (UK), 175 High Holborn, London, WC1V 7AA, United Kingdom provide the Blippar image-recognition phone app. Metaio GmbH of Infanteriestraße D-80797 München, Germany provides the Metaio Augmented Reality platform.

### Statement of Invention

Operating a data processing device to visually determine status of equipment by: capturing at least one image comprising a view of at least a part of the equipment; comparing in a first comparison operation, a first captured image with graphical information comprising aspects of equipment appearance to identify the equipment; comparing, either in the same, first comparison operation or in a second comparison operation, either the first or a second captured image with graphical information comprising aspects of equipment appearance to determine a status of the equipment; and displaying to a user, user support content based on the status of the equipment so determined. The data processing device may be a mobile phone, or similar, which captures the image and displays support content to a user or a server which obtains the image from and provides support content to a mobile communications device.

The equipment may comprise CPE and the user support content may comprise instructions and information to assist a technically naïve user in resolving a fault condition with the CPE.

The data processing device may comprise a server. A system for visually determining an equipment status comprises an interface configured to receive at least one captured image comprising a view of at least a part of the equipment and a processor. The processor is configured to: compare in a first comparison operation, a first captured image with graphical information comprising aspects of equipment appearance to identify the equipment; compare in the first or a second comparison operation, the first or a second captured image with graphical information comprising aspects of equipment appearance to determine a status of the equipment; and provide user support content based on the identified status of the equipment for display to a user.

The data processing device may comprise a mobile communications device. A system for visually determining an equipment status comprising: an image capture device for capturing at least one image comprising a view of at least a part of the equipment; a display for displaying graphical content to a user; and a processor. The processor is configured to: compare in a first comparison operation, a first captured image with graphical information comprising aspects of equipment appearance to identify the equipment; compare in the first or a second comparison operation, the first or a second captured image with graphical information comprising aspects of equipment appearance to determine a status of the equipment; and provide on the display to a user, support content based on the identified status of the equipment.

### Brief Description of the Drawings

In order to aid understanding, embodiments of the invention will now be described by way of example with reference to the drawings in which:
Figure 1 shows a block diagram of a system suitable for implementing the present invention;
Figures 2a and 2b show capture and display on a conventional smart phone of an image of an object;
Figures 2c to 2h show representations of screen displays from a smart phone according to aspects of the present invention;
Figure 3 shows a representation of signal flows according an embodiment of the invention;
Figures 4 and 5 show in block diagram form, aspects of a device suitable for implementing the present invention.

### Detailed Description of Embodiments

The present invention may be implemented by conventional computer equipment, such as hardware servers, smart phones or similar mobile devices programmed with new computer software. The design of, and procedures to implement, this invention provide new functionality in that they provide new ways of diagnosing the status of user equipment, especially for technically naïve users such as domestic users of CPE. The invention thus enables improved fault resolution and customer support without requiring a high level of technical ability on the part of the user.

The invention may be used to apply augmented reality techniques in a novel way to improve customer support available to customers operating customer premises equipment (CPE), such as wireless broadband modems, power line modems and video set top boxes. The invention may thus improve customer self-help and fault handling ability relating to the operation of CPE. For example, the invention may enable a technically naive customer to obtain for themselves an accurate diagnosis of equipment status to verify correct operation or to determine if a suspected fault truly exists. Moreover, the invention may enable equipment status to be diagnosed automatically by the system without requiring the involvement of helpdesk staff or any technical knowledge on the part of the customer. On the basis of the fault diagnosis provided, the invention may provide guidance to the customer on carrying out simple actions, for example, to remedy a minor malfunction or correct a wrong setting and so achieve optimum operation of equipment without requiring contact with skilled technical staff. The invention further allows support staff, when their involvement proves necessary, more efficiently and quickly to analyse the operation of customer equipment remotely, thus allowing faults to be determined more reliably and saving support staff time and, in addition, potentially saving the high cost of a customer support visit to customer premises. For example, the invention may provide support staff with detailed information on the status of the equipment, which information would normally be derived from a time-consuming interrogation of the customer, who may be confused and may provide incorrect information, resulting in more time being wasted to no effect.

According to an embodiment, the invention automates aspects of customer support for users of CPE, e.g. by recognising the state of status indicators, such as-LEDs, on the CPE. According to an embodiment, an image of the CPE is captured by a smartphone or similar mobile device running an enhanced augmented reality app. According to an embodiment, the app is provided with graphical information comprising aspects of the appearance of various CPEs, so as to allow the app to determine the type of CPE. Once the type of CPE is identified, further graphical information may be supplied, comprising reference images of the identified CPE in various states, for example, with various combinations of status indicators. The various states may include at least one state relating to correct functioning and further states relating to malfunctions. By determining which reference image of the identified CPE most closely matches the captured image, the status of the CPE may be determined and a suitable response generated. Alternatively, the app may be provided with graphical information comprising reference images showing of the appearance of various CPEs in various states, so as to allow the app to determine the type of CPE and its status in one operation.

A variety of responses may be provided according to embodiments of the invention. Possible responses may include (a) an indication of the identified status of the equipment; (b) information on corrective action; (c) information on use of the equipment; (d) a request for further information from the user; and (e) a link to a webpage providing one of (b), (c) and (d). According to various embodiments, information may be provided to the user visually as text and graphics overlaid on the captured image or aurally as voice output.

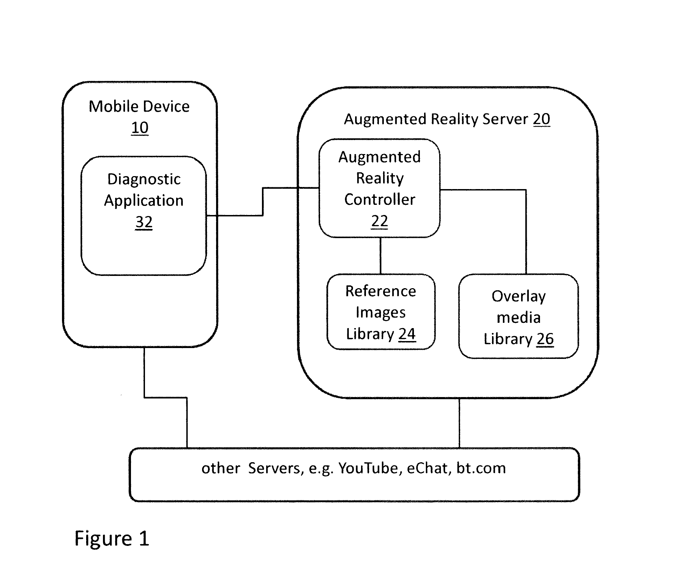

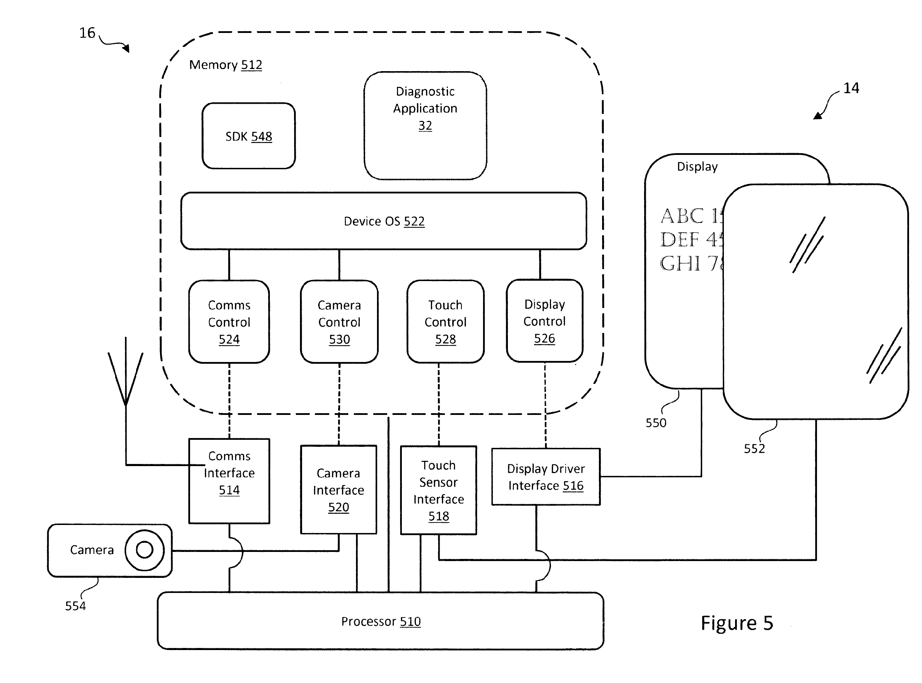

A system for implementing the invention will now be described by way of example with reference to **Figure 1**. Mobile device 10 comprises conventional operating software (to be described later) together with additional software modules - i.e. diagnostic application 32 - that provide enhanced functionality according to embodiments of the present invention. Device 10 comprises a camera or other image capture device (554 in Figure 5) and an image display screen (14 in Figure 5). According to alternative embodiments, device 10 may comprise two devices, i.e. one device comprising a camera and another comprising a display, where this is more convenient or for other operational reasons. For the purposes of the present invention, software running on device 10 may be considered as acting as a client to software running on augmented reality server 20. Augmented reality server 20 comprises conventional operating software (not shown) and additional software modules: augmented reality controller 22 and data modules: image library 24 and overlay media library 26. Reference images or overlay media may be stored on the server in catalogues or libraries. Augmented reality controller 22 cooperates with software running on device 10 to provide enhanced functionality. According to embodiments of the present invention, augmented reality controller 22 processes captured images obtained from mobile device 10 with reference images from image library 24.

According to further embodiments, additional servers may be brought into communication with one or both of device 10 and augmented reality server 20. Suitable additional servers may, for example, be selected from video-sharing, eChat and service provider web sites (such as bt.com).

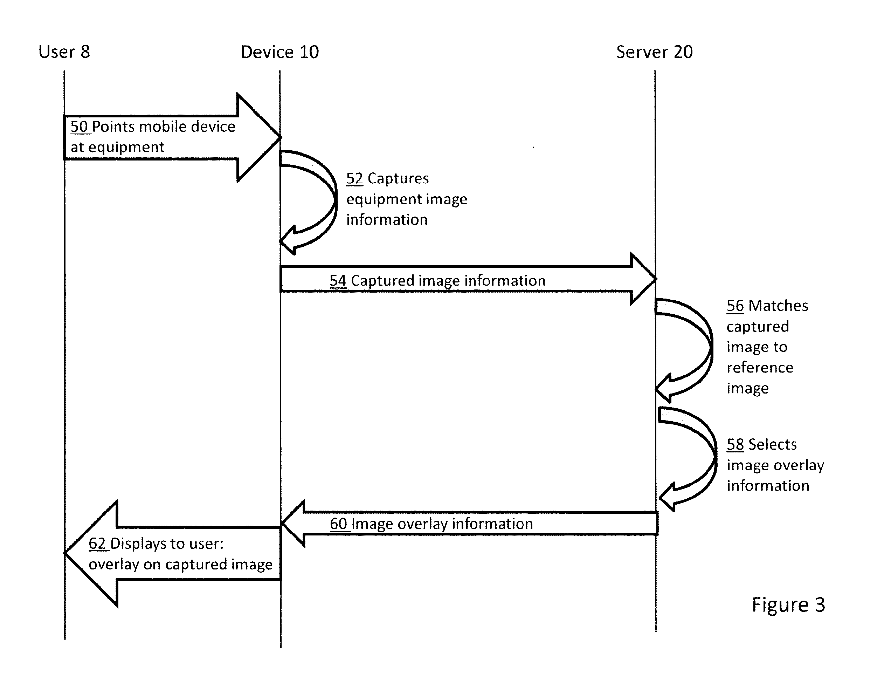

A brief overview of operation of the invention will now be provided with reference to the signal flow diagram of **Figure 3**. A user 8 of device 10 points (50) a camera on device 10 at the equipment to be diagnosed. Typically, the user will have reason to suspect the equipment is malfunctioning or may just wish to check on its performance. Device 10 captures (52) an image of the equipment and sends (54) the captured image to augmented reality server 20. Augmented reality controller 22 on augmented reality server 20 attempts to match (56) information from image library 24 with the image information provided by device 10. When augmented reality controller 22 finds a match, it then selects (58) one or more appropriate images or other media from overlay media library 26 for sending (60) to diagnostic application 32 on device 10. Diagnostic application 32 interacts with other software modules on device 10 to display (62) to the user an image combining a view of the equipment and the selected overlay media. The overlay media could comprise images, video, animation and text, including hyperlinks to other web servers e.g. YouTube, eChat or BT.com.

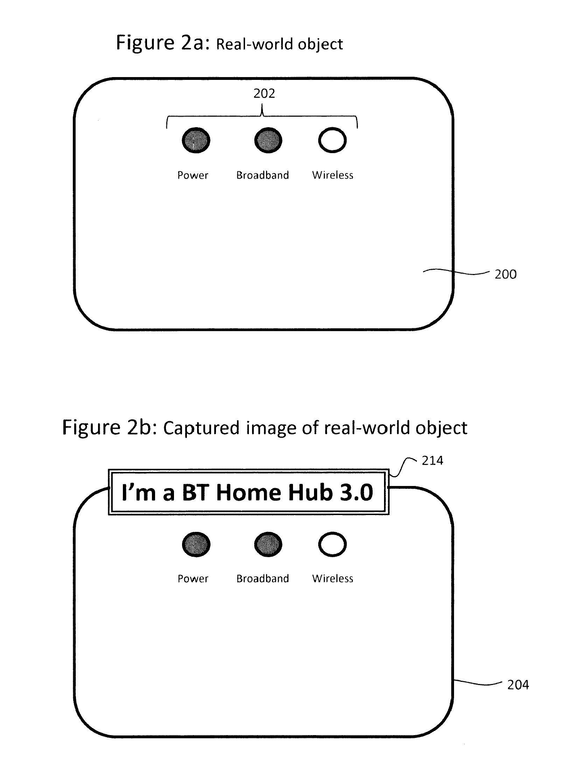

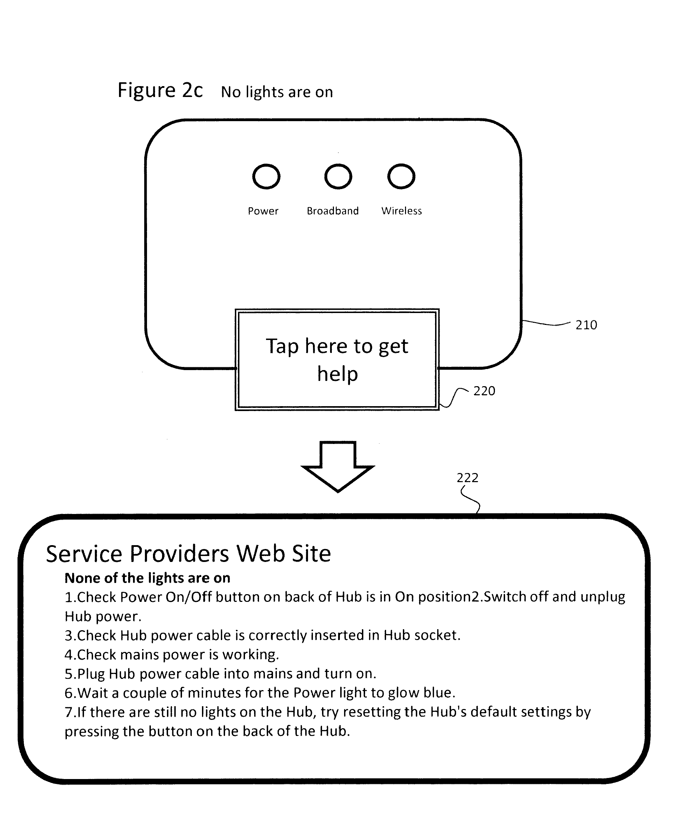

The invention will now be described in more detail with reference to **Figures 2c-2h** which show screen displays from a device according to aspects of the present invention. The display of device 10 will be described here as a touch-screen display but other types of display, for example those designed to operate in combination with a pointer device, may also be used. **Figure 2a** shows a physical object, i.e. a piece of real-world electronic equipment. Equipment 200 is shown as a broadband interface with wireless (e.g: WiFi) and wired communications capability, such as the Home Hub 3 from British Telecommunications plc, although the current invention is not restricted to any one piece of equipment but has application across a wide range of CPE and other pieces of equipment. Equipment 200 has one or more optical indicators 202 (labelled, by way of example, "Power", "Broadband" and "Wireless"), which may exist in different states of illumination including producing no light, so as to indicate the status of the equipment. In the example of the equipment shown in Figure 2a, the indicators provide information on the power supply to the equipment, the broadband connection with the equipment and the wireless or WiFi connections with the equipment. Typically, the status indicators will be formed by an array of light-emitting diodes, although rather than being light-emitting, the indicators could rely on differences in reflectivity to convey information.
**Figure 2b** shows an image 204 of the physical object, i.e. of equipment 200, as captured by the camera 554 on device 10 and displayed on display 14. Operating software running on device 10 has superimposed graphics onto image 210 to provide information to the user of device 10. In the example of Figure 2b, text box 214 is superimposed identifying the equipment 200 as a BT Home Hub 3.0. This display may be generated to confirm to the customer that the system has correctly identified the customer's equipment.
**Figures 2c to 2h** show an image 210 of equipment 200, as captured by camera 554 and displayed on display 14 according to embodiments of the invention. In the example shown in **Figure 2c**, no light is detected from any of the indicators 202 on equipment 200. As a result diagnostic application 32 diagnoses a fault condition relating to the power supply and superimposes a message in text box 220 on image 210 to prompt the user to tap the touch screen of display 14 so as to activate a hyperlink associated in the device operating software with text box 220. Once the user taps on the appropriate part of screen 14 and this is detected, a browser window is opened on the device screen 14, and a request sent to a server for a web page indicated by the hyperlink. The browser window may obscure image 210, either partially or completely. Figure 2c shows at 222, an example of a suitable web page as may be displayed in a browser window on display 14. The example web page instructs the customer as follows:

### None of the lights are on

*1. Check Power On*/*Off button on back of Hub is in On position*
*2. Switch off and unplug Hub power.*
*3. Check Hub power cable is correctly inserted in Hub socket.*
*4. Check mains power is working.*
*5. Plug Hub power cable into mains and turn on.*
*6. Wait* a *couple of minutes for the Power light to glow blue.*
*7. If there are still no lights on the Hub, try resetting the Hub's default settings by pressing the button on the back of the Hub.*

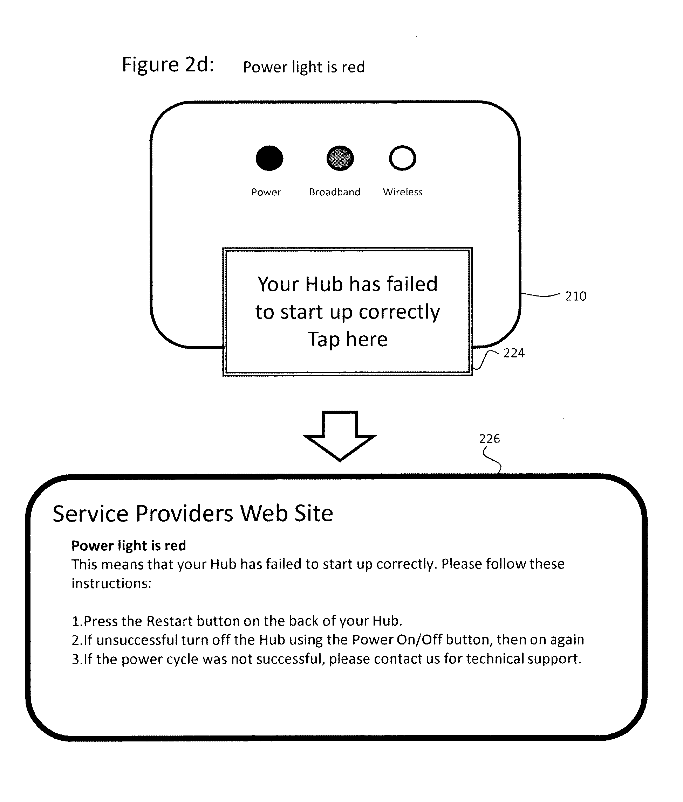

In the example shown in **Figure 2d** power indicator on equipment 200 shows red, no light is detected from either of the remaining two indicators 202 on equipment 200. As a result, diagnostic application 32 diagnoses that the device has failed to start up correctly and superimposes a message 224 on image 210 to inform the user appropriately. Message 224 also prompts the user to tap the touch screen so as to activate a hyperlink associated in the device software with "failed start up" message 224. Once the user's tap on the screen is detected, a browser window is opened on device screen 14 and a request sent to a server for a web page indicated by the hyperlink. Figure 2d shows at 226, an example of a suitable web page for display in a browser window on display 14 of device 10. The example web page instructs the user as follows:

### Power light is red

*This means that your Hub has failed to start up correctly. Please follow these instructions:*
*1. Press the Restart button on the back of your Hub.*
*2. If unsuccessful turn off the Hub using the Power On*/*Off button, then on again*
*3. If the power cycle was not successful, please contact us for technical support.*

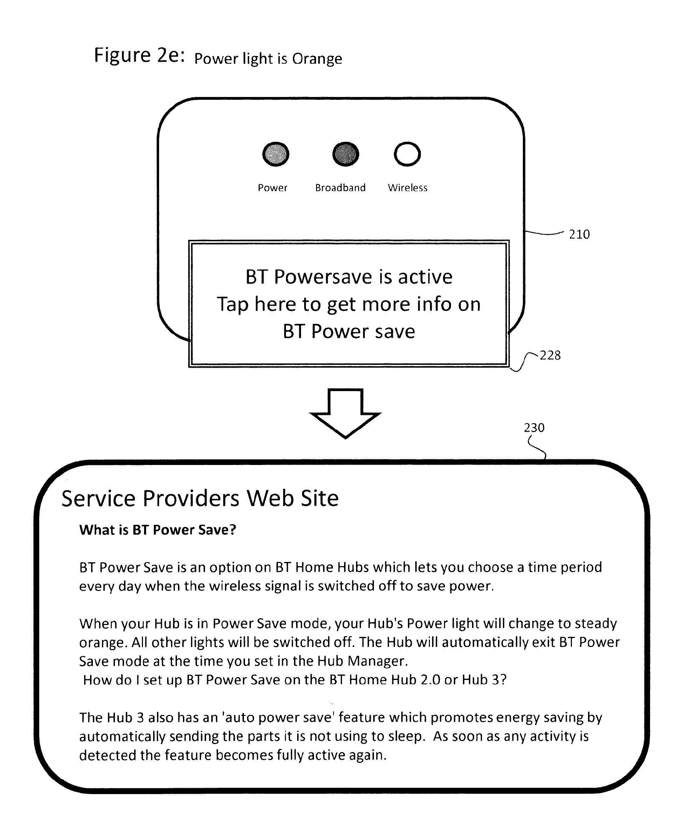

In the example shown in **Figure 2e**, power indicator on equipment 200 shows orange, no light is detected from either of the remaining two indicators 202 on equipment 200. As a result the software running on device 10 diagnoses that the device has entered a power-saving state and superimposes a message 228 on image 210 to inform the user appropriately. Unlike the previous two examples, this is not a fault condition. Message 228 also prompts the user to tap the touch screen so as to activate a hyperlink associated in the device software with "power-save" message 228. Once the user's tap on the screen is detected, a browser window is opened on the device screen 14 and a request sent to a server for a web page indicated by the hyperlink. Figure 2e shows at 230, an example of a suitable web page for display in a browser window on display 14 of device 10.

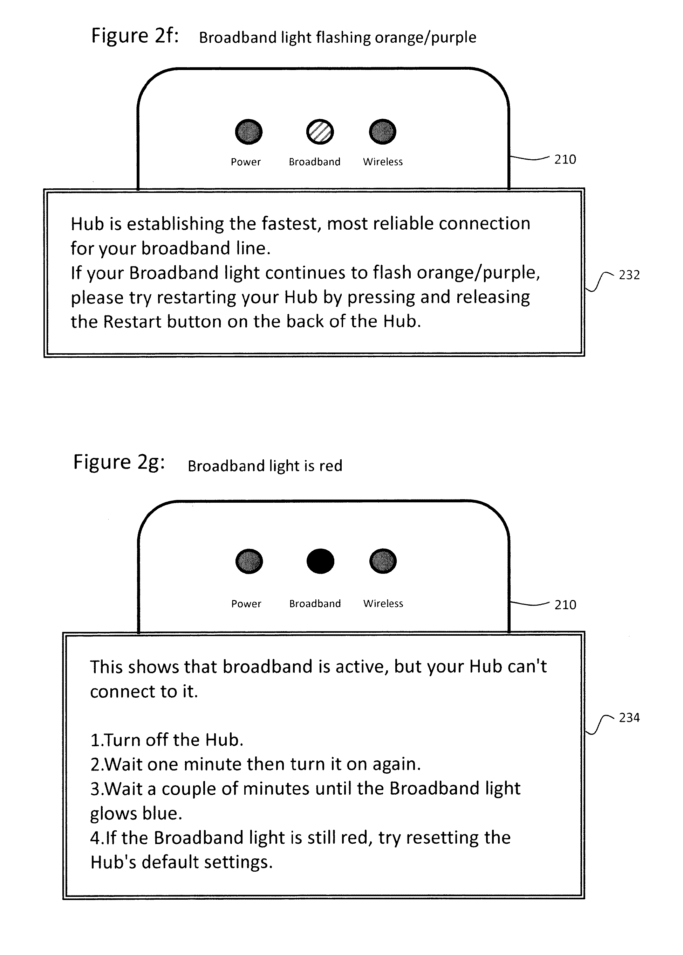

In the example shown in **Figure 2f**, the broadband indicator on equipment 200 is flashing orange/purple. As a result the software running on device 10 diagnoses that the device is in the process establishing a reliable connection for the broadband line. There is no fault condition. However, where the status indication continues unchanged for an excessively long period, it may be necessary to restart the Hub. The software running on device 10 superimposes a message 232 on image 210 to inform the user appropriately.

In the example shown in **Figure 2g****,** the broadband indicator is red. This shows a fault condition, in that, the broadband signal is present but the Hub cannot connect to it. The software running on device 10 superimposes a message 234 on image 210 to inform the user to take the following simple sequence of actions to remove the fault:
1.Turn off the Hub.
2.Wait one minute then turn it on again.
3.Wait a couple of minutes until the Broadband light glows blue.
4.If the Broadband light is still red, try resetting the Hub's default settings.

The invention may also, according to a further embodiment, not illustrated, process status indications provided by the third, "wireless" indicator. For example, where the wireless indicator is flashing orange, the software running on device 10 may superimpose a message on image 210 to inform the user that there is no fault but the hub is in the process of connecting to another wireless device using WPS.

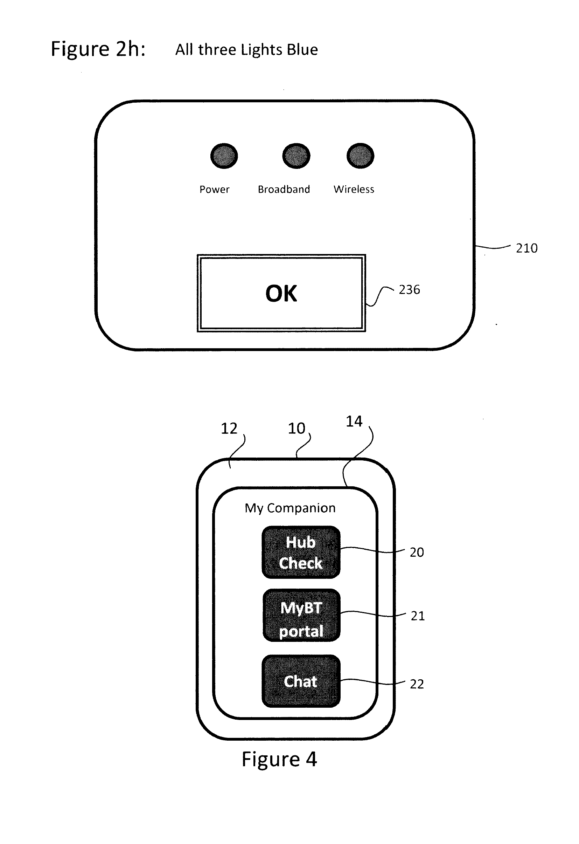

In the example shown in **Figure 2h**, all three indicators 202 on equipment 200 show blue. As a result diagnostic application 32 diagnoses that the device is working correctly and superimposes a message 236 on image 210 to inform the user appropriately.

**Figure 4** shows device 10, such as a smart phone, having a front panel 12 to which there is mounted a touch sensitive display 14. By way of example, a menu for app: "My BT Companion" is shown on display 14. The menu comprises a series of graphic boxes 20-22 arranged in a column, with each graphic box showing an icon representing a different function that the mobile device can provide as a result of running various apps. By way of example, a menu may comprise an icon for a "Hub Check" function 20, a "MyBT portal" function 21 and a "Chat" function 22. An icon from the menu may be selected by e.g. double-clicking or touching in the area occupied by the icon. Selection of an icon may result in the app related to the function represented by the selected icon being run and the display changing to one specific to that app (for example, as shown in Figures 2c to 2h). According to other embodiments, a menu may comprise a series of graphic boxes arranged as a row or in an alternative arrangement.

We now discuss device 10 in more detail with reference to Figure 5. As shown schematically in **Figure 5**, an operational circuit 16 is provided for controlling device 10. As shown in Figure 5, display 14 has an image-generating layer 550 for generating a visible image. Typically, the image-generating layer 550 will be formed by an array of light-emitting diodes, although rather than being light-emitting, the display could rely on differences in reflectivity to form an image. Positioned adjacent the image-generating layer, a touch-sensitive layer 552 (shown offset in Figure 5 for reasons of clarity) is provided for sensing a user's touch. Touch-sensitive layer 552 is arranged such that it lies directly in front of image generating layer 550 when the display 14 is facing the user. Touch-sensitive layer 552 is sufficiently transparent for the page generated by the image generating layer 550 to be visible through the touch sensitive layer.

There are several ways to construct a touch screen display suitable for use in the present invention but probably the most common are capacitive and resistive technologies, each of which involves creating one or more transparent conductive layer above or integrated with the display. The touch panel is positioned in front of a display screen so that the touch sensitive surface covers the viewable area of the display screen. The touch panel registers touch events and sends these signals to a controller. The controller processes these signals and in response to the processed signals performs various functions such as those described above. In this way, a user can select a function for the device to perform by simply touching the surface of the touch sensitive screen with one, or more finger, stylus or similar object.

- The main hardware elements of operational circuit 16 comprise a processor 510 operationally coupled to both the display 14, camera 554 and to computer memory 512. Communications controller interface hardware 514 is provided for transmitting and receiving communications traffic under control of processor 510. The communications controller interface may be a PSTN (Public Switched Telephone Network) interface for generating and receiving PSTN signals. Alternatively, if device 10 has cellular telephone network access, the device controller interface may include a wireless transceiver connected to an antenna for wireless communications. Display driver interface hardware 516 is connected to image-generating layer 550 for the display of graphical elements (which may comprise fields of one or more of text, graphics and images) under control of processor 510. Touch screen sensor interface hardware 518 is connected to touch screen 552 for processing touch signals under control of processor 510. Camera interface 520 is connected to camera 554 for controlling its operation and for processing image signals under control of processor 510. As used herein, the term processor broadly refers to a computing device such as a microcontroller, microprocessor, a microcomputer, a programmable logic controller, an application specific integrated circuit, and any other programmable circuit with the capacity to execute a stored program.

Processor 510 operates under the control of computer software, here operating system 522 and software modules 32, 524, 526, 528 and 530, which provide instructions for controlling various aspects of the operation of device 10, such as transmitting wand receiving voice and data over a telephone network, capturing displaying and processing images.

The device software may be considered as a number of components layers, as follows: at the lowest level device operating system OS 522 interfacing with the device controller software modules 524, 526, 528 and 530; SDK 548; and diagnostic application 32. As indicated by dashed lines in Figure 5, device controller software modules 524, 526, 528 and 530 function to control hardware interfaces 514, 516, 518 and 520, respectively, as described next. Communications software module 524 controls operation of communications interface hardware 514 for sending and receiving voice and data via an external communications medium such as the PSTN or wireless networks. Display control software module 526 controls operation of display driver interface hardware 516 to control the display of graphical elements on image-generating layer 550. Touch screen control software module 528 controls operation of touch screen sensor interface hardware 518 to process touch signals received from touch screen 552. Camera control software module 530 controls operation of camera interface 520 to control operation of camera 554 and process image signals received from it.

Diagnostic application 32 is a core device function, which uses a library of reference images to process images captured by camera 554 in order to determine and stimulate a reaction to the status of equipment in the field of view of the camera. The library of reference images will comprise various reference images of equipment to be identified, at least some of the reference images including details of status indicators on the equipment. SDK 548 comprises device software, conventionally provided by the device manufacturer, which allows developers access to low-level software functions supported by the device. According to the current embodiment, SDK 548 provides interfaces (APIs) for interaction by diagnostic application 32 with the low-level device software functions. This allows diagnostic application 32 control over aspects of operation of the device. Diagnostic application 32 comprises code to extend standard control features to deliver a working implementation of the invention. In order to introduce additional functionality according to the present invention, diagnostic application 32 is installed on the device, e.g., typically deployed onto an individual device by means of a software update.

In summary, the invention provides a method of operating a data processing device to visually determine (that is by comparison of images) status of equipment (e.g. CPE) by: capturing at least one image comprising a view of at least a part of the equipment; comparing in a first comparison operation, a first captured image with graphical information comprising aspects of equipment appearance to identify the equipment; comparing, either in the same, first comparison operation or in a second comparison operation, either the first or a second captured image with graphical information comprising aspects of equipment appearance to determine a status of the equipment; and displaying to a user, user support content based on the status of the equipment so determined. The data processing device may be a mobile phone, or similar, which captures the image and displays support content to a user or a server which obtains the image from and provides support content to a mobile device.

The above embodiments are to be understood as illustrative examples of the invention. Further embodiments of the invention are envisaged and will be evident to the skilled reader. According to an alternative embodiment, at least some of the functionality described above in connection with diagnostic application 32 may be provided by software running on augmented reality server 20. For example one or more comparison operation may be provided by augmented reality server 20, rather than on device 10. According to this alternative embodiment, captured image information is passed from device 10 to augmented reality server 20 in order to allow the comparison to take place. According to further embodiments, one or more comparison operations may be used to determine the status of the equipment. Where a single comparison operation is used, a single captured image may be checked for aspects identifying the equipment and checked for other aspects identifying the status of the equipment in a single operation. Where a two comparison operations are used, a single captured image may be checked in both operations in sequence or a different, second image may be checked in a second comparison operation for aspects identifying the status of the equipment. According to an embodiment, the graphical information may comprise a single set of images, in which each image is used for both identifying the equipment and identifying the status of the equipment. According to an alternative embodiment, the graphical information may comprise two sets of images: one set used for identifying the equipment and a second set used for identifying the status of the equipment, once it has been identified. It is to be understood that any feature described in refation to any one embodiment may be used in combination with one or more features of another of the embodiments, or any combination of the embodiments. Furthermore, equivalents and modifications not described above will be evident to the skilled reader and may also be employed without departing from the scope of the invention, which is defined in the accompanying claims.

As will be understood by those skilled in the art, the invention may be implemented in computer program product software, any or all of which may be contained on various storage media so that the program can be loaded onto one or more computing devices (including the mobile devices, servers and switches described above) or downloaded over a computer network using a suitable transmission medium. The computer program product used to implement the invention may be embodied on any suitable carrier, readable by a suitable computer input device. For example, such computer program product may comprise semiconductor, magnetic or optically-readable media. The invention may be implemented by one or more hardware computing devices or systems having one or more processors and memory storing one or more computer programs that when executed by the one or more processors cause the computing devices to perform the invention.

## Claims

1. A method of visually determining an equipment status;
in which the method comprises operating a data processing device to:
receive at least one captured image comprising a view of at least a part of the equipment;
compare in a first comparison operation a first captured image with graphical information comprising aspects of equipment appearance to identify the equipment;
compare in the first or in a second comparison operation the first or a second captured image with graphical information comprising aspects of appearance of the equipment to determine a status of the equipment; and
provide user support content based on the identified status of the equipment for display to a user.

2. The method as claimed in claim 1, in which the or each captured image is captured by one of a mobile communications device and the data processing device.

3. A method of visually determining an equipment status;
in which the method comprises operating a mobile communications device to:
capture at least one image comprising a view of at least a part of the.equipment;
compare in a first comparison operation, a first captured image with graphical information comprising aspects of equipment appearance to identify the equipment;
compare in the first or in a second comparison operation, the first or a second captured image with graphical information comprising aspects of equipment appearance to determine a status of the equipment; and
display to a user, user support content based on the identified status of the equipment.

4. The method as claimed in any above claim, in which the first and second comparison operations are merged into a single comparison operation.

5. The system as claimed in any of claims 1 to 4, in which the support content is displayed on the display together with an image of at least a part of the equipment.

6. The method as claimed in any above claim, in which the or each captured image is part of a video sequence comprising views of the equipment and in which the method comprises repeating at least one comparison operation with different captured images from the video sequence to update the identified status of the equipment; and displaying to a user an indication of the updated status of the equipment.

7. The method as claimed in any above claim, in which the graphical information identifies visual status indications exhibited by the equipment.

8. The method as claimed in any above claim, in which the user support content comprises at least one of:
(a) an indication of the identified status of the equipment;
(b) information on corrective action;
(c) information on use of the equipment;
(d) a request for further information from the user; and
(e) a link to a webpage providing one of (b), (c) and (d).

9. A system for visually determining an equipment status comprising:
an interface configured to receive at least one captured image, in which the at least one captured image comprises a view of at least a part of the equipment;
in which the system further comprises a processor configured to:
compare in a first comparison operation, a first captured image with graphical information comprising aspects of equipment appearance to identify the equipment;
compare in the first or in a second comparison operation, the first or a second captured image with graphical information comprising aspects of equipment appearance to determine a status of the equipment; and
provide user support content based on the identified status of the equipment for display to a user.

10. A system for visually determining an equipment status comprising:
an image capture device for capturing at least one image comprising a view of at least a part of the equipment;
a display for displaying graphical content to a user;
a processor configured to:
compare in a first comparison operation, a first captured image with graphical information comprising aspects of equipment appearance to identify the equipment;
compare in the first or in a second comparison operation, the first or a second captured image with graphical information comprising aspects of equipment appearance to determine a status of the equipment; and
provide on the display to a user, support content based on the identified status of the equipment.

11. The system as claimed in any of claims 9 and 10, in which the first and second comparison operations are merged into a single comparison operation.

12. The system as claimed in any of claims 9 to 11, in which the support content is displayed on the display together with an image of at least a part of the equipment.

13. The system as claimed in any of claims 9 to 12 , in which the graphical information identifies visual status indications exhibited by the equipment.
